# EUROPÄISCHE PATENTSCHRIFT

(11) **EP 0 598 261 B1**
(45) Veröffentlichungstag und Bekanntmachung des Hinweises auf die Patenterteilung: **15.05.1996**
(21) Anmeldenummer: 93117462.7
(22) Anmeldetag: 28.10.1993
(51) Int. Cl.: H02G 15/04

(54) **Kabelverschraubung für Erdungs- oder Abschirm-Kabel**
Cable gland for earthing or screening cable
Presse-etoupe pour câble de mise à la masse ou de blindage

(30) Priorität: 14.11.1992 DE 4238517
(43) Veröffentlichungstag der Anmeldung: 25.05.1994
(73) Patentinhaber: Anton Hummel Verwaltungs-GmbH, D-79183 Waldkirch (DE)
(72) Erfinder: Gehring, Peter, D-79263 Simonswald (DE)
(74) Vertreter: Schmitt, Hans, Dipl.-Ing.

(56) Entgegenhaltungen:
- DE-A- 2 348 882
- DE-A- 3 640 832
- DE-C- 592 667
- FR-A- 2 371 077
- FR-A- 2 517 132
- GB-A- 2 060 278

## Beschreibung

Die Erfindung betrifft eine Kabelverschraubung für Erdungs- oder Abschirm-Kabel mit einer Schraubhülse aus elektrisch leitendem Werkstoff, insbesondere aus Metall, mit einer damit verbindbaren Gegenhülse oder dergleichen Druckstück, insbesondere mit einer Überwurfmutter, zum Fixieren des ein Metallgeflecht zur Erdung oder Abschirmung des Kabelinneren aufweisenden Kabels mit einem mit Hilfe der Gegenhülse gegen das Kabel preßbaren Klemmeinsatz, wobei die Gegenhülse den Klemmeinsatz mit einer im wesentlichen ringartigen Druckfläche zumindest an einer der Stirnseiten beaufschlagt oder übergreift und beim Anziehen des Gewindes mit einer sich verjüngenden Form, zum Beispiel mittels Rundung oder mittels eines Konus, welche am Klemmeinsatz und/oder in der Schraubhülse oder anstelle der ringartigen Druckfläche in der Gegenhülse angeordnet ist, einen mit axialen Schlitzen versehenen, Klemmfinger bildenden Bereich des Klemmeinsatzes radial gegen das Kabel hin verformt, wobei der Klemmeinsatz an seinem den Klemmfingern abgewandten Bereich eine Verlängerung hat, aus der eine abisolierte Zone oder abisolierte Drähte des Metallgeflechtes in axialer Richtung zur Herstellung einer elektrischen Verbindung überstehen.

Aus der DE-OS 23 48 882 ist eine vergleichbare Kabelverschraubung bekannt. Der Klemmeinsatz wird dabei durch ein zu einem einseitig offenen Ring geformten Blechbiegeteil gebildet, welcher sich von einer mittleren Zone größter Dicke zu seinen Stirnseiten hin verjüngt. Mittels ringförmiger Schultern in der Überwurfmutter wird ein Klemmbereich dieses aus Blech bestehenden Klemmeinsatzes an die Kabeloberfläche gedrückt, während mit Hilfe einer Schulter in der Schraubhülse der entgegengesetzte Bereich gegen das abisolierte Metallgeflecht gedrückt wird. Die Andruckkraft hängt also im wesentlichen von der Biegeelastizität des Blechbiegeteiles ab, das heißt die für die Zugentlastung zur Verfügung stehenden Klemmkräfte sind begrenzt. Darüber hinaus ist nicht auszuschließen, daß die Blechränder bei dem Verklemmen mit dem isolierten Teil des Kabels die Isolierung beschädigen.

Aufgrund einer gewissen Eigensteifigkeit des Blechbiegeteiles ist auch die gleichmäßige Verteilung der Andruckkräfte einerseits auf den isolierten und andererseits auf den abisolierten Teil des Kabels in Frage gestellt. Schließlich muß die Montage als aufwendig angesehen werden, weil der Blechbiegeteil relativ zu der Kabelverschraubung lose angeordnet ist und erst nach dem Anziehen der Verschraubung fixiert wird. Während der Montage können also ungewollte Axialverschiebungen des Klemmeinsatzes nicht ausgeschlossen werden.

Der Erfindung liegt deshalb die Aufgabe zugrunde, eine Kabelverschraubung der eingangs erwähnten Art zu schaffen, die sowohl bezüglich der Montage als auch der Herstellung einfacher ist, eine gute Zugentlastung mit präziser Erfassung des Kabels erlaubt, ohne den isolierten Bereich des Kabels zu beschädigen, und die dennoch zu einer schnellen einfachen und guten Kontaktverbindung mit der abisolierten Zone oder den abisolierten Drähten des Metallgeflechtes des Kabels führt.

Zur Lösung dieser Aufgabe ist die Kabelverschraubung dadurch gekennzeichnet, daß der Klemmeinsatz aus isolierendem Werkstoff oder Kunststoff besteht, einen etwa kreisringförmigen Querschnitt hat, in Gebrauchslage wenigstens bereichsweise an der Innenseite der Schraubhülse und/oder des Druckstückes anliegt und seine Verlängerung hülsen- oder stutzenartig ausgebildet ist, daß die überstehenden Drähte im Bereich ihres Austrittes aus der Verlängerung des Klemmeinsatzes um dessen Stirnseite auf seine Außenseite umbiegbar sind, daß die Hüllfläche des Klemmeinsatzes und der an dessen Außenseite anliegenden umgebogenen Drähte des Drahtgeflechtes einen in Ausgangsstellung größeren Querschnitt oder Durchmesser haben, als es dem Innendurchmesser der den Klemmeinsatz und seine Verlängerung in Gebrauchsstellung umschließenden Schraubhülse in diesem Bereich entspricht, und daß der Klemmeinsatz mindestens in diesem die Drähte an seiner Außenseite abstützenden Bereich in radialer Richtung federnd nachgiebig ist.
Die Erfindung macht sich also die bewährten Klemmeinsätze aus Kunststoff oder vergleichbarem Werkstoff zunutze, die weitgehend formschlüssig in die Kabelverschraubung passen, also nicht lose in dieser Kabelverschraubung angeordnet werden müssen. Mit Hilfe solcher Klemmeinsätze lassen sich hohe Klemmkräfte am Kabel, also eine gute Zugentlastung erreichen. Darüber hinaus ist die Herstellung preiswert.

Die gesamte Montage ist dadurch einfach, daß der Klemmeinsatz nach dem Aufschieben auf das Kabel und dem Umbiegen der aus ihm hervortretenden Drähte einfach zusammen mit diesen Drähten in die Schraubhülse eingeschoben werden kann und so seine Endlage erhält, bevor dann das Druckstück oder die Überwurfmutter zur Erzeugung der Klemmkraft verschraubt wird. Aufgrund der Größenverhältnisse im Bereich der Verlängerung des Klemmeinsatzes werden dabei die Drähte fest zwischen dieser Verlängerung des Klemmeinsatzes und der Schraubhülse eingeklemmt, was automatisch zu einer guten Kontaktverbindung führt. Zusätzliche Maßnahmen oder besondere Kontaktringe eventuell mit angelöteten Erdungsleitungen werden vermieden. Insgesamt ergibt sich also eine Kabelverschraubung, die mit Kabelverschraubungen sowohl hinsichtlich Zugentlastung als auch Einfachheit der Montage vergleichbar ist, welche keinen Kontakt mit einem Erdungs- oder Abschirm-Geflecht herstellen müssen. Es ist lediglich eine zusätzliche Verlängerung des Klemmeinsatzes, die auch bei vorbekannten Kabelverschraubungen schon beispielsweise zur Halterung einer Dichtung bekannt ist, erforderlich, um in Gebrauchsstellung die abisolierten Drähte des Kabelgeflechtes an die Innenseite der mettalischen Schraubhülse zu drücken.

Um das Aufstecken der Schraubhülse auf die umgebogenen Drähte zu erleichtern, ist es zweckmäßig, wenn der Durchmesser der Hüllfläche der an der Außenseite des Klemmeinsatzes umgebogenen Drähte unmittelbar benachbart zu der Stirnseite der Verlängerung des Klemmeinsatzes kleiner als der Innendurchmesser der Schraubhülse oder Außenhülse ist und mit Abstand zu der Stirnseite auf den größeren Durchmesser zunimmt. Bei dem ersten Aufstecken der Schraubhülse auf die umgebogenen Drähte muß also noch nicht die zu deren Andrücken dienende radiale Verformung durchgeführt werden. Erst wenn die Stirnseite mit den umgebogenen Drähten ein Stück weit von der Schraubhülse umschlossen ist, also ein seitliches Ausweichen nicht mehr möglich ist, erfolgt dann durch weiteres Einschieben die radiale Klemmung der Drähte und damit die sicherer und schnelle Kontakt-Verbindung.

Eine besonders einfache Konstruktion ergibt sich, wenn an der Außenseite der Verlängerung des Klemmeinsatzes nahe der Stirnseite zumindest ein wenigstens an einem Teil des Umfanges, insbesondere am gesamten Umfang umlaufender Andruck-Wulst, - Wulst, -Bund oder -Vorsprung vorgesehen ist, der die Federwirkung oder die Andruckkraft für die Drähte bewirkt oder verstärkt. Gegebenenfalls können auch in axialer Richtung einander benachbart zum Beispiel zwei derartige Andruck-Wülste vorhanden sein. Ein solcher Andruck-Vorsprung, der etwa ringförmig an der Außenseite der Verlängerung des Klemmeinsatzes nach der Stirnseite umläuft, kann beim Zusammenschieben von Schraubhülse und Klemmeinsatz automatisch bei seinem Eintritt in seine Schraubhülse die an ihm außenseitig anliegenden Drähte des Metallgeflechtes gegen die Innenseite der Schraubhülse drücken und so einen sehr guten Kontakt herstellen.

Besonders zweckmäßig ist es, wenn der Andruck-Vorsprung oder - Wulst einstückig mit der Außenseite der Verlängerung des Klemmeinsatzes verbunden ist. Es ist aber auch möglich, daß der Andruck-Vorsprung durch einen insbesondere in einer Nut oder an einem Anschlag an der Außenseite der Verlängerung des Klemmeinsatzes angeordneter separater Ring, zum Beispiel ein O-Ring oder ein Profilring aus elastisch nachgiebigem Werkstoff, insbesondere aus Gummi oder Kunstgummi ist. In diesem Falle ergibt sich ein einfacheres Werkzeug für die Herstellung des Klemmeinsatzes und gegebenenfalls können Klemmeinsätze, die an ihrem den Klemmfingern in axialer Richtung benachbarten Bereich eine Verlängerung haben, nachträglich mit einem solchen Andruck-Wulst versehen werden.

Der Abstand des Andruck-Vorsprunges von der von den Drähten übergriffenen Stirnseite der Verlängerung des Klemmeinsatzes kann kleiner als der Abstand von dem ihm zugewandten Ende der Klemmfinger sein, beispielsweise etwa der radialen Dicke der Verlängerung entsprechen. Dies stellt einen guten Kompromiß zwischen der möglichst schnellen Anpressung der Drähte beim Einschieben in die Schraubhülse einerseits und einem ersten zentrierenden Einführen ohne Aufbringen einer Klemmkraft andererseits dar.

Um in Gebrauchsstellung die gewünschte Anpreßkraft für die Drähte an die Innenseite der Schraubhülse sicherzustellen, kann die Verlängerung selbst dadurch federnd gestaltet sein, daß sie in axialer Richtung verlaufende Wandschwächungen, Nuten oder Schlitze hat, die insbesondere an der von den Drähten übergriffenen Stirnseite münden.

Zusätzlich oder stattdessen ist es jedoch auch möglich, daß der Andruck-Wulst als in sich federnde Lippe ausgebildet ist, die von der Verlängerung des Klemmeinsatzes radial oder mit einem gewölbten oder konisch schrägen Querschnitt von der Oberseite der Verlängerung absteht. Einerseits wird durch diese federnde Gestaltung der Verlängerung ihr Einführen zusammen mit den umgebogenen Drähten erleichtert, andererseits aber die gewünschte Andruckkraft für eine gute Kontaktgabe zumindest im Bereich des Wulstes oder der umlaufenden Rippe sichergestellt.

Damit nach dem Zusammenfügen der Kabelverschraubung bei ihrer Montage die in gutem Kontakt befindlichen Drähte nicht durch eine Verdrehung der Schraubhülse gegenüber der Verlängerung des Klemmeinsatzes beispielsweise beim Anziehen des Gewindes der Überwurfmutter oder ihrem eigenen Einschrauben mit ihrem Anschlußgewinde verwunden werden können und dabei eventuell beschädigt oder sogar abgebrochen werden, ist es zweckmäßig, wenn der Klemmeinsatz und/oder seine Verlängerung in Gebrauchsstellung gegen Verdrehung relativ zu der metallischen Schraubhülse gesichert ist. Nach dem Zusammenfügen von Klemmeinsatz und Schraubhülse, wodurch der Kontakt zwischen den Drähten und der Schraubhülse hergestellt wird, ist also eine Relativbewegung in Umfangsrichtung ausgeschlossen.

Als Verdrehsicherung können dabei an dem Klemmeinsatz außenseitige, axial verlaufende Stege und an der Schraubhülse dazu passende innenseitige Nuten oder an dem Klemmeinsatz Nuten und an der Schraubhülse dazu passende, in Gebrauchsstellung eingreifende Stege vorgesehen sein und diese Nuten oder Stege können insbesondere in axialer Richtung von der Kabeleinführseite gesehen vor der Kontaktfläche der Schraubhülse, also in Gebrauchsstellung auf der Seite des Andruck-Vorsprunges der Verlängerung des Klemmeinsatzes angeordnet sein, die der von den Drähten umgriffenen Stirnseite dieser Verlängerung abgewandt ist. Dadurch wird erreicht, daß die Drähte in Gebrauchsstellung nicht in diesen Nuten zu liegen kommen und dort eventuell nicht genügend fest an der Wandung des Metallkörpers angedrückt werden.

Es sei noch ein weiterer wesentlicher Vorteil des Klemmeinsatzes aus Kunststoff erwähnt, der darin besteht, daß an der Innenseite des Klemmeinsatzes, insbesondere im Bereich der Klemmfinger, eine ringförmig umlaufende Dichtung vorgesehen und mit eingeklemmt sein kann. Somit ergibt sich nicht nur ein guter Kontakt und eine hohe Zugentlastung, sondern zusätzlich auch noch eine gute Abdichtung der Kabelverschraubung, wie sie mit Hilfe eines Blech-Klemmeinsatzes nicht erreichbar ist.

Insgesamt wird eine Kabelverschraubung für Erdungs- oder Abschirmkabel geschaffen, die die Vorteile einer hohen Zugentlastung und Abdichtbarkeit mit einer einfachen Herstellung und Montage bei dennoch gutem elektrischen Kontakt mit dem Metallgeflecht des Kabels verbindet, ohne daß zusätzliche Kontaktringe oder Kontakthülsen etwa gemäß DE 27 02 610 C2 benötigt werden.

Nachstehend sind Ausführungsbeispiele der Erfindung anhand der Zeichnung näher beschrieben. Es zeigt:
- Fig.1: in schaubildlicher Darstellung und teilweise aufgeschnitten eine bezüglich ihrer Einzelteile auseinandergezogen gezeichnete Kabelverschraubung mit einem Erdungskabel, einer Schraubhülse, einer Überwurfmutter und einem Klemmeinsatz, an dessen der Überwurfmutter abgewandter Stirnseite abisolierte Drähte des Metallgeflechtes des Erdungskabels auf die Außenseite umgebogen sind,
- Fig.2: die Kabelverschraubung gem. Fig.1 in montiertem Zustand, in welchem die nach außen auf die Außenseite des Klemmeinsatzes umgebogenen Drähte von dem Klemmeinsatz an die Innenseite der aus elektrisch leitendem Werkstoff bestehenden Schraubhülse mittels eines an der Außenseite einer Verlängerung des Klemmeinsatzes radial vorstehenden Andruck-Ringes angedrückt sind,
- Fig.3: eine zusammengeschraubte Kabelverschraubung teils in Seitenansicht, teils im Axialschnitt, bei welcher als Andruck-Vorsprung eine federnd umbiegbare Lippe ringförmig an der Verlängerung des Klemmeinsatzes umläuft,
- Fig.4: eine der Fig.3 entsprechende Darstellung, bei welcher die Verlängerung des Klemmeinsatzes Wandschwächungen hat und zum Andrücken der Drähte ein Andruck-Wulst vorgesehen ist,
- Fig.5: eine Kabelverschraubung, bei welcher als Andruck-Vorsprung ein teilweise in einer umlaufenden Nut gehaltener O-Ring vorgesehen ist,
- Fig.6: eine Kabelverschraubung, bei welcher als Andruck-Vorsprung ein Ring mit rechteckigem Querschnitt gegen einen an der Verlängerung des Klemmeinsatzes umlaufenden Anschlag anliegt und gegenüber diesem in radialer Richtung übersteht,
- Fig.7: eine abgewandelte Ausführungsform, bei welcher die Schraubhülse statt mit einer Überwurfmutter mit einem einschraubbaren Druckstück zusammenwirkt, wobei als Andruck-Vorsprung wiederum ein O-Ring vorgesehen ist, der aber auch durch einen anderen Andruck-Vorsprung gemäß den übrigen Ausführungsbeispielen ersetzt sein könnte,
- Fig. 8 bis 15: jeweils Klemmeinsätze, die teils in Seitenansicht teils im Axialschnitt dargestellt sind und unterschiedlich gestaltete Andruck-Vorsprünge und/oder an ihrer Stirnseite offene Axialschlitze oder Wandschwächungen zur Erzeugung einer radialen Federkraft haben und sowohl bei Kabelverschraubungen gem. den Figuren 1 bis 6 als auch bei einer Kabelverschraubung gem. Fig.7 anwendbar sind, sowie
- Fig.16 bis 18: teilweise aufgeschnittene perspektivische Darstellungen von auseinandergezogenen Kabelverschraubungen, bei denen Verdrehsicherungen an dem Klemmeinsatz und der Schraubhülse vorgesehen sind.

Bei den nachfolgend beschriebenen verschiedenen Ausführungsbeispielen erhalten übereinstimmende oder sich entsprechende Teile auch bei abgewandelter Formgebung, aber übereinstimmender Funktion jeweils dieselben Bezugszahlen.

Eine im ganzen mit 1 bezeichnete Kabelverschraubung dient zum zugfesten Befestigen und Halten eines Erdungs- oder Abschirmkabels 2, im folgenden kurz Kabel 2 genannt.

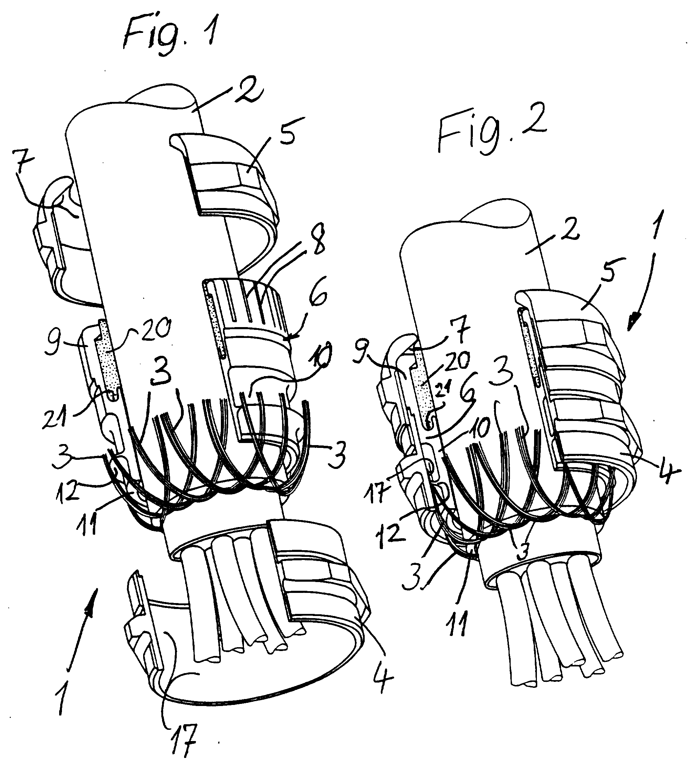

In Fig.1 und 2 ist angedeutet, daß solche Erdungs- oder Abschirmkabel 2 ein Metallgeflecht zur Erdung oder Abschirmung des Kabelinneren aufweisen und dieses Metallgeflecht und seine Drähte 3 im Bereich der Kabelverschraubung 1 auf ein kurzes Stück des Kabels 2 abisoliert werden, um für eine Kontaktverbindung mit der Kabelverschraubung 1 geeignet zu sein.

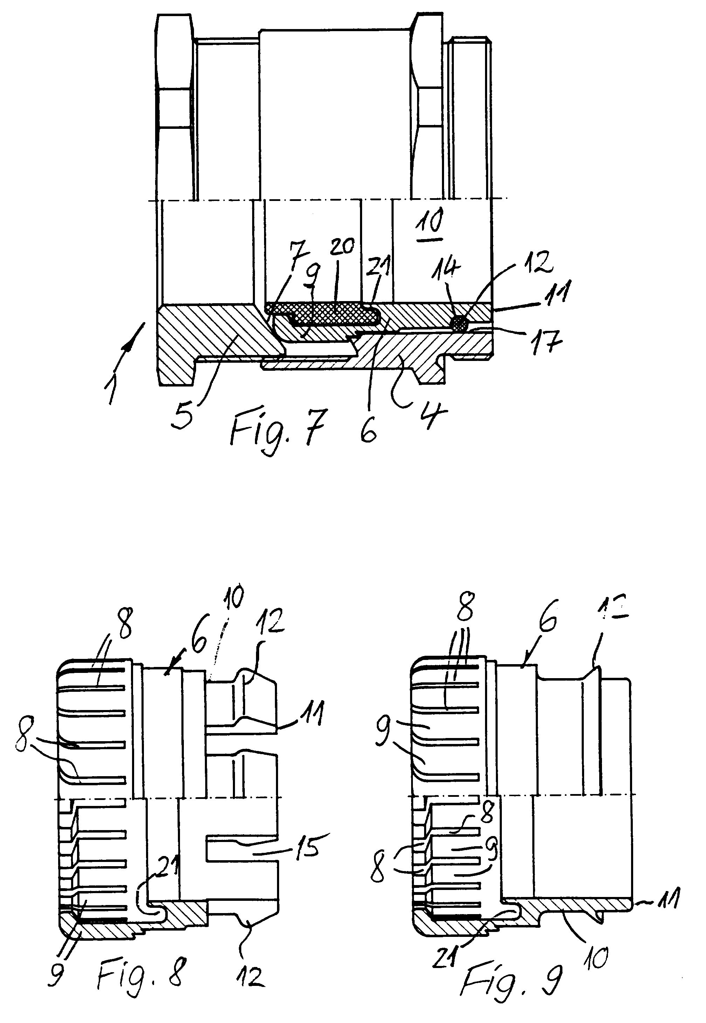

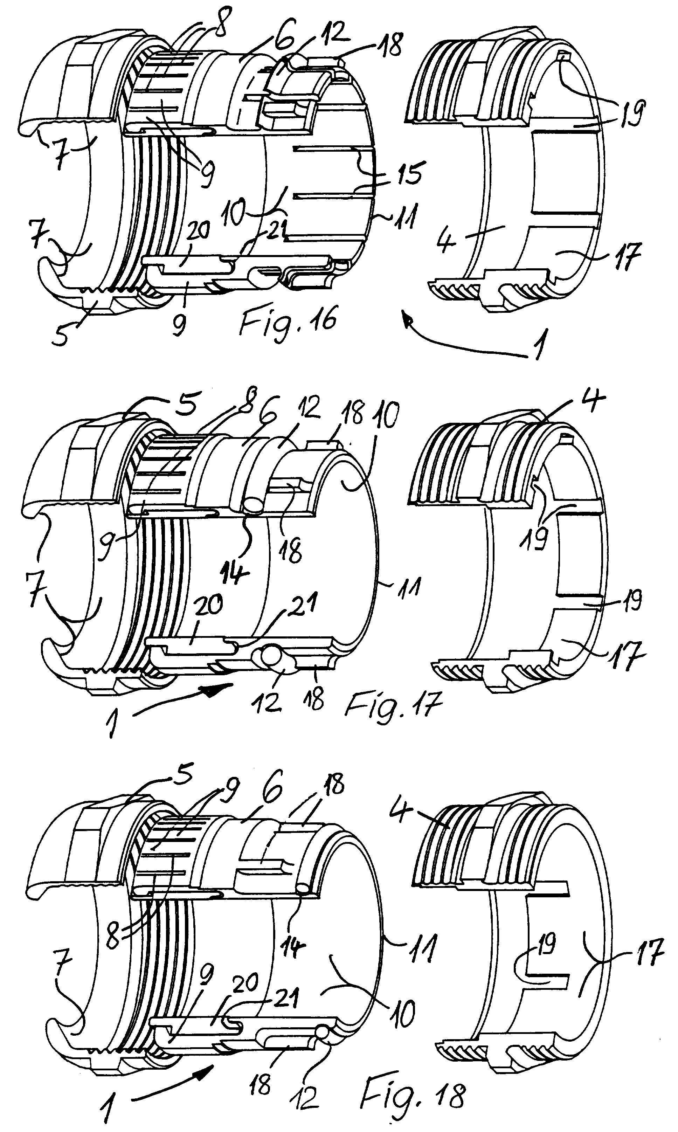

Die Kabelverschraubung 1 weist eine Schraubhülse 4 aus elektrisch leitendem Werkstoff, also bevorzugt aus Metall, und eine damit verbindbare oder verschraubbare Gegenhülse 5 auf, die in den Ausführungsbeispielen gem. Fig.1 bis 6 und gem. Fig.16 bis 18 als Überwurfmutter, im Ausführungsbeispiel gem. Fig.7 aber als Druckstück ausgebildet ist.

Zu der Kabelverschraubung 1 gehört ferner ein Klemmeinsatz 6, mit welchem das Kabel 2 als solches fixiert wird, aber auch das Metallgeflecht in noch zu beschreibender Weise in seiner abisolierten Zone beaufschlagt wird. Vor allem in den Figuren 2 bis 7 erkennt man, daß dabei die Gegenhülse 5 den Klemmeinsatz 6 mit einer im wesentlichen ringartigen Druckfläche 7 an einer Stirnseite beaufschlagt und übergreift und beim Anziehen des Gewindes zwischen Gegenhülse 5 und Schraubhülse 4 mit einer sich verjüngenden Form, im Ausführungsbeispiel einem Konus, welcher dabei in allen Ausführungsbeispielen an der Gegenhülse 5 vorgesehen ist, aber auch an dem Klemmeinsatz 6 selbst oder in der Schraubhülse vorgesehen werden könnte, einen mit axialen Schlitzen 8 versehenen, Klemmfinger 9 bildenden Bereich des Klemmeinsatzes 6 vor allem an den in axialer Richtung stirnseitigen Enden der Klemmfinger 9 radial gegen das Kabel 2 hin verformt. Auf diese Weise wird die Zugentlastung an dem Kabel 2 bewirkt, welches durch diese Verklemmung in axialer Richtung in der Kabelverschraubung 1 festgelegt wird.

Der Klemmeinsatz 6 hat dabei an seinem den Klemmfingern 9 abgewandten Bereich eine Verlängerung 10, aus der die abisolierte Zone oder die abisolierten Drähte 3 des Metallgeflechtes in axialer Richtung zur Herstellung der elektrischen Verbindung überstehen. Dies erkennt man besonders deutlich in Fig.1.

Der Klemmeinsatz 6 besteht aus isolierendem Werkstoff, insbesondere aus Kunststoff. Er hat einen etwa kreisringförmigen Querschnitt und liegt in Ausgangslage, das heißt vor dem Anziehen des Gewindes zwischen Schraubhülse 4 und Gegenhülse 5 bereits an der Innenseite der Schraubhülse 4 und/oder der Gegenhülse 5 an. Man erkennt dies beispielsweise in den Figuren 3 bis 7. Die Kabelverschraubung 1 kann also als kompaktes Teil gelagert und versandt werden und besteht aus so wenigen Einzelteilen, daß auch die Montage, wie sie in Fig.1 angedeutet ist, sehr einfach durchgeführt werden kann. Vorteilhaft ist dabei, daß die Verlängerung 10 hülsen- oder stutzenartig ausgebildet ist und somit koaxial und konzentrisch zu der gesamten Kabelverschraubung 1 und insbesondere der Schraubhülse 4 in deren Innerem angeordnet werden kann. Dabei sind die Durchmesserverhältnisse in noch zu beschreibender Weise so gestaltet, daß diese Verlängerung 10 klemmend in die Schraubhülse 4 paßt.

Wie in Fig.1 und 2 dargestellt, sind die überstehenden Drähte 3 im Bereich ihres Austrittes aus der Verlängerung 10 des Klemmeinsatzes 6 um dessen Stirnseite 11 an dieser Verlängerung 10 auf seine Außenseite umbiegbar. Das Kabel 2 braucht also nur in dem Bereich, in welchem die Kabelverschraubung 1 angeordnet und der Kontakt hergestellt werden sollen, wonach der Klemmeinsatz 6 so weit aufgeschoben wird, daß seine Stirnseite 11 in den Bereich dieser Abisolierung gelangt. Nunmehr können die Drähte 3 entgegen ihrer ursprünglichen Verlaufsrichtung nach außen und zurück gebogen werden, um so auf die Außenseite der Verlängerung 10 des Klemmeinsatzes 6 zu gelangen. Anschließend kann nun die Schraubhülse 4 über diese umgebogenen Drähte 3 und die Verlängerung 10 des Klemmeinsatzes 6 geschoben werden bzw. umgekehrt kann das Kabel 2 mit dem Klemmeinsatz 6 und den entsprechend umgebogenen Drähten in die Schraubhülse eingeschoben werden. Die zuvor schon auf das Kabel 2 aufgesteckte Überwurfmutter kann anschließend als Gegenhülse 5 mit der Schraubhülse 4 verschraubt werden, wonach die Kabelverschraubung ihre Gebrauchsstellung gem. Fig.2 erreicht hat.

Dabei ist vorgesehen, daß die Hüllfläche des Klemmeinsatzes 6 im Bereich seiner Verlängerung 10 und der an dessen Außenseite anliegenden umgebogenen Drähte 3 des Drahtgeflechtes einen in Ausgangsstellung größeren Querschnitt oder Außendurchmesser haben, als es dem Innendurchmesser der dem Klemmeinsatz 6 und seine Verlängerung 10 in Gebrauchsstellung umschließenden Schraubhülse 4 in diesem Bereich entspricht. Der Klemmeinsatz 6 ist zumindest in diesem die Drähte 3 an seiner Außenseite abstützenden Bereich der Verlängerung 10 in radialer Richtung federnd nachgiebig gestaltet, war in unterschiedlicher noch zu beschreibender Weise geschehen kann; dadurch ergibt sich, daß durch das Einfügen des die Drähte 3 an seiner Außenseite aufweisenden Klemmeinsatzes 6 diese Drähte 3 fest an die Innenseite der elektrisch leitenden Schraubhülse 4 angepreßt werden, so daß allein schon durch dieses Zusammenfügen der Kabelverschraubung 1 der elektrische Kontakt zu dem als Erdung oder Abschirmung dienenden Metallgeflecht hergestellt ist. Ein zusätzliches Einfügen von Kontaktringen oder zusätzlichen Hülsen oder ein Anlöten einer Erdungsleitung können vermieden werden.

Um das erste Zusammenschieben von Schraubhülse 4 und die Drähte 3 auf der Außenseite aufweisender Verlängerung 10 des Klemmeinsatzes 6 leichtgängig durchführen zu können, bevor dann die Anpreßkraft in radialer Richtung erzeugt wird, ist bei allen Ausführungsbeispielen der Durchmesser der Hüllfläche der an die Außenseite des Klemmeinsatzes 10 umgebogenen Drähte 3 unmittelbar benachbart zu der Stirnseite 11 der Verlängerung 10 kleiner als der Innendurchmesser der Schraubhülse 4. Benachbart mit axialem Abstand zu der Stirnseite 11 ist dann der schon erwähnte größere Durchmesser vorgesehen.

Diese Durchmesserzunahme könnte zwar allmählich erfolgen oder unter Umständen umgekehrt durch eine Durchmesserverkleinerung an der Innenseite der Schraubhülse 4 erzeugt sein, jedoch ist in allen Ausführungsbeispielen in zweckmäßiger und vorteilhafter Weise vorgesehen, daß an der Außenseite der Verlängerung 10 des Klemmeinsatzes 6 nahe der Stirnseite 11 ein zumindest an einem Teil des Umfanges, bevorzugt jedoch am gesamten Umfang umlaufender Andruck-Vorsprung 12 vorgesehen ist, der die Federwirkung oder die Andruckkraft für die Drähte 3 bewirkt oder verstärkt. Dieser Andruckvorsprung 12 kann unterschiedliche Querschnittsformen haben, ist jedoch zweckmäßigerweise in allen Fällen als im wesentlichen umlaufender Ring gestaltet. Die einzelnen Möglichkeiten, wie dieser Andruck-Vorsprung 12 als Bund oder Wulst oder Lippe geformt sein kann, wird nachfolgend anhand der einzelnen Ausführungsbeispiele noch erläutert. In den Figuren 1 bis 4, 8 bis 11, 13 und 16 ist der Andruck-Vorsprung 12 einstückig mit der Außenseite der Verlängerung 10 des Klemmeinsatzes 6 verbunden, stellt also kein zusätzliches Teil dar, sondern kann bei dem Herstellen des Klemmeinsatzes 6 sogleich mitangeformt werden.

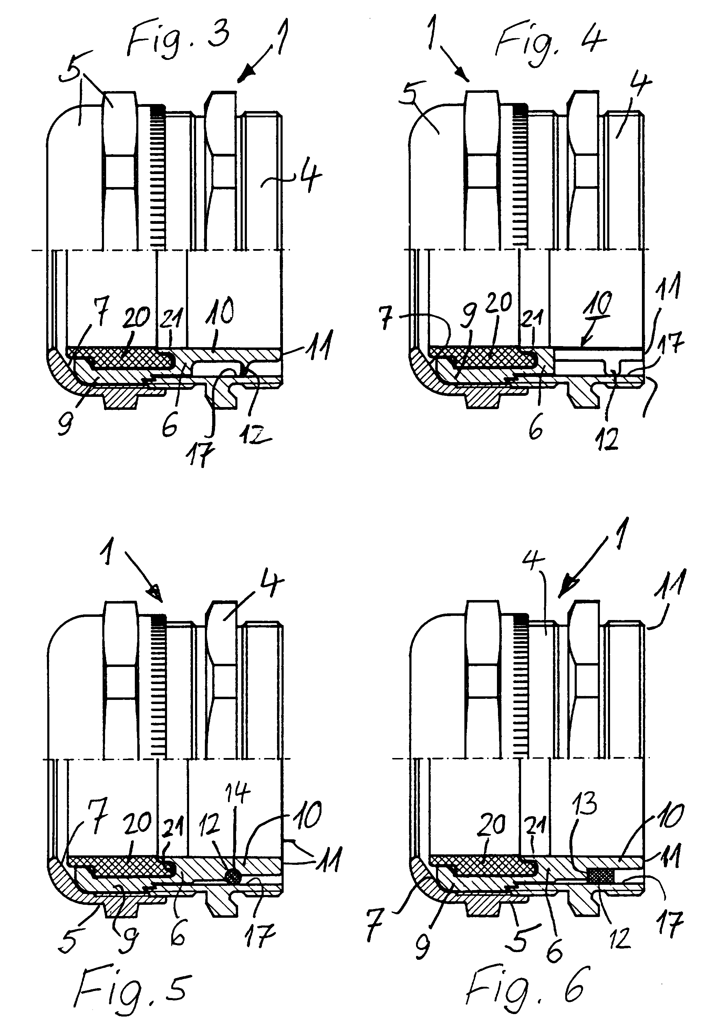

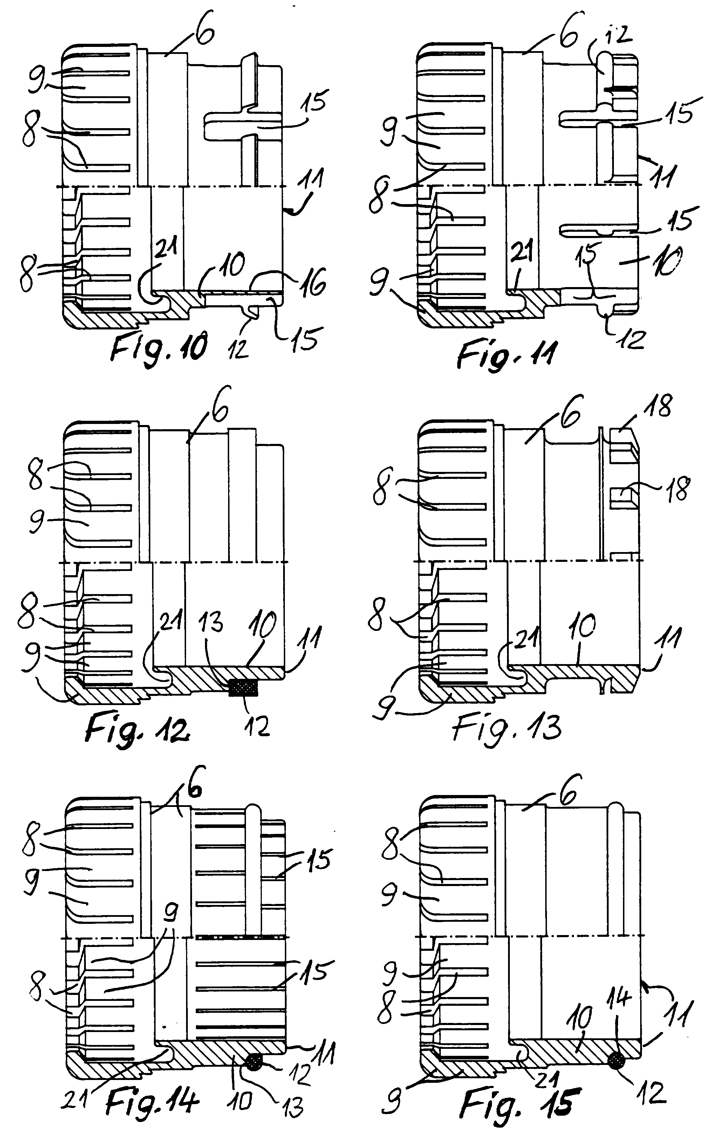

In den Ausführungsbeispielen gern. Fig.5 bis 7, 12 bis 15, 17 und 18 hingegen ist der Andruck-Vorsprung 12 ein an der Außenseite der Verlängerung 10 des Klemmeinsatzes 6 angeordneter separater Ring, zum Beispiel ein O-Ring (Fig.5,7,14,15,17 und 18) oder ein Profilring zum Beispiel mit Rechteckquerschnitt (Fig.6 und 12) aus elastisch nachgiebigem Werkstoff, insbesondere aus Gummi oder Kunstgummi. Dieser als eigenständiger Ring ausgebildete Andruck-Vorsprung 12 kann dabei gem. den Figuren 12 und 14 in axialer Richtung an einem Anschlag 13 an der Außenseite der Verlängerung 10 anliegen, wobei dieser Anschlag auf der der Stirnseite 11 abgewandten Seite des ringförmigen Andruck-Vorsprunges 12 angeordnet ist. Es ist aber gem. den übrigen Ausführungsbeispielen auch möglich und zweckmäßig, daß dieser separate Ring in einer ihn axial festlegenden Nut 14 angeordnet ist.

In all diesen Fällen bewirkt schon der Werkstoff dieses O-Ringes oder des Profilringes die gewünschte Nachgiebigkeit in radialer Richtung, die in umgekehrter Richtung als Andruckkraft für die umgebogenen Drähte 3 gegen die Innenseite der Schraubhülse 4 zur Verfügung steht.

Der Abstand des Andruckvorsprunges 12 von der von den Drähten 3 übergriffenen Stirnseite 11 der Verlängerung 10 des Klemmeinsatzes 6 kann dabei unterschiedlich sein. Zweckmäßig ist es, wenn er relativ klein ist und beispielsweise etwa der radialen Dicke der Verlängerung entspricht, wie es beispielsweise in Fig.15 und 18 verwirklicht ist. Um so kürzere abisolierte Drähte 3 können noch mit Sicherheit erfaßt und an die Innenseite der Schraubhülse 4 angedrückt werden.

Zum Ausführungsbeispiel gem. Fig.8 sei noch erwähnt, daß dort ein konischer Übergang von der Stirnseite 11 zu dem größten Durchmesser des Andruck-Vorsprunges 12 vorgesehen ist bzw. der Andruck-Vorsprung 12 praktisch unmittelbar an die Stirnseite 11 angrenzend zunächst auf geringerem Durchmesser beginnt und dann stetig bis zu seinem größten Durchmesser zunimmt. Dabei ist in diesem Ausführungsbeispiel zum Ausgleich der Durchmesserzunahme vorgesehen, daß die Verlängerung 10 an der Stirnseite 11 mündende Schlitze 15 hat und dadurch in radialer Richtung federnd nachgiebig ist. Gleichzeitig kann dabei dann auch in diesem Bereich eine zusätzliche Einklemmung des Kabels 2 bewirkt werden, wenn nämlich die zwischen den Schlitzen 15 befindlichen Abschnitte der Verlängerung 10 durch das Aufschieben der Schraubhülse 4 etwas radial nach innen verformt und dadurch an die Kabeloberfläche angedrückt werden.

Auch in den Ausführungsbeispielen gem. Fig.4, 10, 11 und 16 ist die Verlängerung 10 selbst dadurch federnd gestaltet, daß sie in axialer Richtung verlaufende Wandschwächungen, Nuten oder Schlitze 15 hat, die an der von den Drähten 3 übergriffenen Stirnseite 11 münden. Fig.10 zeigt dabei eine Wandschwächung, bei welcher an der Innenseite der Verlängerung 10 noch eine dünne Haut 16 verbleibt, während die Schlitze 15 gemäß Fig.11 in radialer Richtung durchgehend sind.

Auch in Fig.14 sind solche axialen Schlitze 15 in größerer Anzahl an der Verlängerung 10 vorgesehen, wobei der Vergleich dieser Ausführungsbeispiele zeigt, daß die Zahl und die Breite dieser Schlitze 15 variieren kann.

Durch die Schlitze 15 ergibt sich beim Ausführungsbeispiel nach Fig.8 und 11, aber auch Fig.10, daß der Andruck-Vorsprung 12 nicht vollständig ringförmig umlaufend ist, weil er jeweils durch die ihn auch durchsetzenden Schlitze 15 unterbrochen ist. Dennoch ergeben sich genügend breite Bereiche, um Drähte 3 zwischen Verlängerung 10 und daran angeordneten Andruck-Vorsprung 12 und Schraubhülse 4 einzuklemmen und einen guten Kontakt an der inneren Kontaktfläche 17 der Schraubhülse 4 zu ermöglichen.

Die radiale Nachgiebigkeit im Bereich des Andruck-Vorsprunges 12 ist bei den Ausführungsbeispielen gem. Fig.1 bis 3,9,10, 13 und 16 dadurch verwirklicht, daß der Andruck-Vorsprung 12 als in sich federnde Lippe ausgebildet ist, die von der Verlängerung 10 des Klemmeinsatzes an dessen Außenseite radial (Fig.1 bis 3 und 13) oder mit einem gewölbten oder konisch schrägen Querschnitt (Fig.9,10 u.16) absteht. Es leuchtet ein, daß in all diesen Fällen zusammen mit den an der Außenseite anliegenden Drähten 3 beim Zusammenstecken mit der Schraubhülse 4 eine elastische Verformung dieses lippenartigen elastischen Andruck-Vorsprunges 12 möglich ist, so daß dadurch die gewünschte radiale Nachgiebigkeit mit Erzeugung der Andruckkraft für den Kontakt an der Kontaktfläche 17 der Schraubhülse 4 entsteht.

Bei dem Ausführungsbeispiel gem. Fig.10 und 16 ist dabei diese Federwirkung des Andruck-Vorsprunges 12 unterstützt durch die federnde Nachgiebigkeit der Verlängerung 10 selbst, da diese in diesen Fällen axiale Schlitze 15 aufweist.

Bei dem Klemmeinsatz gem. Fig.13 und den Ausführungsbeispielen gern. Fig.16 bis 18 ist vorgesehen, daß der Klemmeinsatz 6 und seine Verlängerung 10 in Gebrauchsstellung gegen eine Verdrehung relativ zu der Schraubhülse 4 gesichert sind. Dazu sind die Schraubhülse 4 und die Verlängerung 10 des Klemmeinsatzes 6 in Gebrauchsstellung in Drehrichtung formschlüssig gekuppelt, können aber in axialer Richtung relativ zueinander verschoben werden. Dies wird durch ineinanderpassende Stege 18 an der Verlängerung 10 und Nuten 19 an der Innenseite der Schraubhülse 4 verwirklicht. Denkbar wäre es allerdings auch, daß an der Innenseite der Schraubhülse 4 Stege vorstehen, die mit entsprechenden Nuten an der Verlängerung 10 zusammenpassen. Dabei können die in axialer Richtung über einen kurzen Bereich der Verlängerung 10 verlaufenden Stege 18 entweder zwischen dem Andruck-Vorsprung 12 und der Stirnseite 11 angeordnet sein, wie es in Fig.13,16 und 17 dargestellt ist oder sie können in zweckmäßiger Weise auf der Seite des Andruck-Vorsprunges 12 angeordnet sein, die der von den Drähten 3 umgriffenen Stirnseite 11 abgewandt ist. In letzterem Falle wird vermieden, daß die Drähte 3 zum Teil in den Nuten 19 der Schraubhülse 4 zu liegen kommen und dadurch die Kupplung behindern.

Abschließend sei noch darauf hingewiesen, daß an der Innenseite des Klemmeinsatzes 6 im Bereich der Klemmfinger 9 bei allen Ausführungsbeispielen eine ringförmig umlaufende, etwa hülsenartige Dichtung 20 vorgesehen ist, also die gesamte Kabelverschraubung 1 nicht nur den gewünschten Kontakt mit den Drähten 3 des Metallgeflechtes an dem Kabel auf einfache Weise herstellen kann, sondern gleichzeitig als druckdichte Kabelverschraubung 1 eingesetzt werden kann. Dies wird dadurch ermöglicht, daß der Klemmeinsatz 6 aus Kunststoff besteht und entsprechende Einformungen und eine Hinterschneidung 21 haben kann, was bei einem aus Blech gefertigten Klemmeinsatz mit vernünftigem Aufwand kaum verwirklicht werden könnte.

Die Kabelverschraubung 1 für Erdungs- oder Abschirm-Kabel 2 hat eine Schraubhülse 4 aus elektrisch leitendem Werkstoff, insbesondere aus Metall, und eine damit verbindbare Gegenhülse 5, die als Druckstutzen (Fig.7) oder als Überwurfmutter (z.B.Fig.1) ausgebildet sein kann. Zum Fixieren des ein Metallgeflecht zur Erdung oder Abschirmung des Kabelinneren aufweisenden Kabels 2 dient ein durch die Verschraubung von Schraubhülse 4 und Gegenhülse 5 gegen das Kabel 2 preßbarer Klemmeinsatz 6, wobei die Gegenhülse 5 den Klemmeinsatz 6 mit einer im wesentlichen ringartigen Druckfläche 7 an zumindest einer seiner Stirnseiten beaufschlagt und übergreift und beim Anziehen des zwischen Schraubhülse 4 und Gegenhülse 5 befindlichen Gewindes mit einer sich verjüngenden Form, im Ausführungsbeispiel mittels einer konischen Form, welche sich dabei an der Gegenhülse 5 befindet, einen mit axialen Schlitzen 8 versehenen, und dadurch Klemmfinger 9 zwischen diesen Schlitzen 8 bildenden Bereich des Klemmeinsatzes 6 radial gegen das Kabel 2 hin verformt. Der Klemmeinsatz 6 hat dabei an seinem den Klemmfingern 9 abgewandten Bereich eine Verlängerung 10, aus der abisolierte Drähte 3 des Metallgeflechtes in axialer Richtung überstehen. Dabei besteht der Klemmeinsatz 6 aus isolierendem Werkstoff oder Kunststoff, hat einen etwa kreisringförmigen Querschnitt und paßt im wesentlichen formgenau in das Innere der Schraubhülse 4, soweit er darin eingreift. Seine Verlängerung 10 ist dabei hülsen- oder stutzenartig ausgebildet. Die überstehenden Drähte 3 sind auf die Außenseite der Verlängerung 10 umbiegbar und die Hüllfläche der Drähte an der Außenseite des Klemmeinsatzes 10 hat in Ausgangslage einen größeren Querschnitt oder Durchmesser als es dem Innendurchmesser der Schraubhülse 4 entspricht, wobei der Klemmeinsatz 6 mindestens in diesem die Drähte 3 an seiner Außenseite abstützenden Bereich 10 in radialer Richtung federnd nachgiebig ist, so daß die Drähte nach dem Zusammenstecken fest an die als Kontaktfläche 17 wirkende Innenseite der Schraubhülse 4 angedrückt werden.
Über die Schraubhülse 4 und deren Anschlußgewinde ergibt sich also auf einfache Weise der Masseanschluß für das Metallgeflecht.

## Patentansprüche

1. Kabelverschraubung (1) für Erdungs- oder Abschirm-Kabel (2) mit einer Schraubhülse (4) aus elektrisch leitendem Werkstoff insbesondere Metall, mit einer damit verbindbaren Gegenhülse (5) oder dergleichen Druckstück, insbesondere mit einer Überwurfmutter, zum Fixieren des ein Metallgeflecht zur Erdung oder Abschirmung des Kabelinneren aufweisenden Kabels (2) mit einem mit Hilfe der Gegenhülse (5) gegen das Kabel (2) preßbaren, Klemmeinsatz (6), wobei die Gegenhülse (5) den Klemmeinsatz (6) mit einer im wesentlichen ringartigen Druckfläche (7) zumindest an einer der Stirnseiten beaufschlagt oder übergreift und beim Anziehen des Gewindes mit einer sich verjüngenden Form, zum Beispiel mittels Rundung oder mittels eines Konus, welche am Klemmeinsatz (6) und/oder in der Schraubhülse (4) oder anstelle der ringartigen Druckfläche in der Gegenhülse (5) angeordnet ist, einen mit axialen Schlitzen (8) versehenen Klemmfinger (9) bildenden Bereich des Klemmeinsatzes (6) radial gegen das Kabel (2) hin verformt, wobei der Klemmeinsatz (6) an seinem den Klemmfingern (9) abgewandten Bereich eine Verlängerung (10) hat, aus der eine abisolierte Zone oder abisolierte Drähte (3) des Metallgeflechtes in axialer Richtung zur Herstellung einer elektrischen Verbindung überstehen, **dadurch gekennzeichnet**, daß der Klemmeinsatz (6) aus isolierendem Werkstoff oder Kunststoff besteht, einen etwa kreisringförmigen Querschnitt hat, in Gebrauchslage wenigstens bereichsweise an der Innenseite der Kabelverschraubung (1) anliegt und seine Verlängerung (10) hülsen- oder stutzenartig ausgebildet ist, daß die überstehenden Drähte (3) im Bereich ihres Austrittes aus der Verlängerung (10) des Klemmeinsatzes (6) um dessen Stirnseite (11) auf seine Außenseite umbiegbar sind, daß die Hüllfläche des Klemmeinsatzes (6) und der an dessen Außenseite anliegenden umgebogenen Drähte (3) des Drahtgeflechtes einen in Ausgangsstellung größeren Querschnitt oder Durchmesser haben, als es dem Innendurchmesser der den Klemmeinsatz (6) und seine Verlängerung (10) in Gebrauchsstellung umschließenden Schraubhülse (4) in diesem Bereich entspricht, und daß der Klemmeinsatz (6) mindestens in diesem die Drähte (3) an seiner Außenseite abstützenden Bereich in radialer Richtung federnd nachgiebig ist.

2. Kabelverschraubung nach Anspruch 1, dadurch gekennzeichnet, daß der Durchmesser der Hüllfläche der an die Außenseite des Klemmeinsatzes (6) umgebogenen Drähte (3) unmittelbar benachbart zu der Stirnseite (11) der Verlängerung (10) des Klemmeinsatzes (6) kleiner als der Innendurchmesser der Schraubhülse (4) ist und mit Abstand zu der Stirnseite (11) auf den größeren Durchmesser zunimmt.

3. Kabelverschraubung nach Anspruch 1 oder 2, dadurch gekennzeichnet, daß an der Außenseite der Verlängerung (10) des Klemmeinsatzes (6) nahe der Stirnseite (11) zumindest ein wenigstens an einem Teil des Umfanges, insbesondere am gesamten Umfang, umlaufender Andruck-Wulst, -Bund oder -Vorsprung (12) vorgesehen ist, der die Federwirkung oder die Andruckkraft für die Drähte (3) bewirkt oder verstärkt.

4. Kabelverschraubung nach einem der Ansprüche 1 bis 3, dadurch gekennzeichnet, daß der Andruck-Vorsprung (12) oder -Wulst einstückig mit der Außenseite der Verlängerung (10) des Klemmeinsatzes (6) verbunden ist.

5. Kabelverschraubung nach einem der Ansprüche 1 bis 3, dadurch gekennzeichnet, daß der Andruck-Vorsprung (12) ein insbesondere einer Nut (14) oder an einem Anschlag (13) an der Außenseite der Verlängerung (10) des Klemmeinsatzes (6) angeordneter separater Ring, zum Beispiel ein O-Ring oder ein Profilring aus elastisch nachgiebigem Werkstoff, insbesondere aus Gummi oder Kunstgummi ist.

6. Kabelverschraubung nach einem der Ansprüche 1 bis 5, dadurch gekennzeichnet, daß der Abstand des Andruck-Vorsprunges (12) von der von den Drähten (3) übergriffenen Stirnseite (11) der Verlängerung (10) des Klemmeinsatzes (6) kleiner als der Abstand von dem ihm zugewandten Ende der Klemmfinger (9) ist, beispielsweise etwa der radialen Dicke der Verlängerung entspricht.

7. Kabelverschraubung nach einem der Ansprüche 1 bis 6, dadurch gekennzeichnet, daß die Verlängerung (10) selbst dadurch federnd gestaltet ist, daß sie in axialer Richtung verlaufende Wandschwächungen, Nuten oder Schlitze (15) hat, die insbesondere an der von den Drähten (3) übergriffenen Stirnseite (11) münden.

8. Kabelverschraubung nach einem der Ansprüche 1 bis 7, dadurch gekennzeichnet, daß der Andruck-Vorsprung (12) als in sich federnde Lippe ausgebildet ist, die von der Verlängerung (10) des Klemmeinsatzes (6) radial oder mit einem gewölbten oder konisch schrägen Querschnitt von der äußeren Oberseite der Verlängerung (10) absteht.

9. Kabelverschraubung nach einem der Ansprüche 1 bis 8, dadurch gekennzeichnet, daß der Klemmeinsatz (6) und/oder seine Verlängerung (10) in Gebrauchsstellung gegen Verdrehung relativ zu der metallischen Schraubhülse gesichert ist.

10. Kabelverschraubung nach Anspruch 9, dadurch gekennzeichnet, daß als Verdrehsicherung an dem Klemmeinsatz (6) außenseitige, axial verlaufende Stege (18) und in der Schraubhülse (4) dazu passende innenseitige ebenfalls axial verlaufende Nuten (19) oder an dem Klemmeinsatz (6) außenseitige Nuten und an der Schraubhülse (4) dazu passende Stege vorgesehen sind und daß diese Nuten (19) und Stege 18) insbesondere in axialer Richtung von der Kabeleinführseite gesehen vor der Kontaktfläche (17) der Schraubhülse (4), also in Gebrauchsstellung auf der Seite des Andruck-Vorsprunges (12) der Verlängerung (10) des Klemmeinsatzes (6) angeordnet sind, die der von den Drähten (3) umgriffenen Stirnseite (11) dieser Verlängerung (10) abgewandt ist.

11. Kabelverschraubung nach einem der Ansprüche 1 bis 10, dadurch gekennzeichnet, daß an der in Gebrauchsstellung dem Kabel (2) zugewandten Innenseite des Klemmeinsatzes (6), insbesondere im Bereich der Klemmfinger (9) eine ringförmig umlaufende Dichtung (20) vorgesehen, zum Beispiel mittels Hinterschneidung (21) gehalten ist.

## Claims

1. A cable gland (1) for earthing or screening cable (2), including a threaded sleeve (4) of electrically conductive material, particularly metal, including a counter-sleeve (5) or similar pressure element connectable thereto, particularly a retaining nut, to fix the cable (2) having a metallic mesh for earthing or screening the interior of the cable, fixation being effected by a clamping insert (6) adapted to be pressed with the aid of the counter-sleeve (5) against the cable (2), wherein the counter-sleeve (5) is applied to or engages over the clamping insert (6) with a substantially ring-like contact surface (7) at least at one of the faces and, as the thread is tightened, deforms the clamping insert (6) by a tapering shape, e.g. by means of curvature or by means of a cone, arranged on the clamping insert (6) and/or in the threaded sleeve (4) or instead of the ring-like contact surface in the counter-sleeve (5), such deformation of the clamping insert (6) being effected in area thereof provided with axial slots (8) forming clamping fingers (9) and taking place radially towards the cable (2), wherein the region of the clamping insert (6) opposite the clamping fingers (9) constitutes an extension (10), projecting axially beyond which is/are an uninsulated zone or uninsulated wires of the metallic mesh for an electrical connection to be established, **characterized in that** the clamping insert (6) is made of insulating material or plastic, has a substantially circular cross section, in the position of use bears at least partially against the inner surface of the cable gland (1), and the clamping insert extension (10) is sleeve-like or socket-like, that in the region where the projecting wires (3) issue from the clamping insert (6) extension (10) they are bendable around the end face (11) and onto the outer surface of the clamping insert (6), that the enveloping surface of the clamping insert (6) and of the overlying bent wires (3) of the wire mesh has a cross section or diameter in the starting position greater than the inside diameter of the part of the threaded sleeve (4) which surrounds the clamping insert (6) and extension (10) thereof in the position of use, and that the clamping insert (6) is resilient radially at least in this region externally supporting the wires (3).

2. A cable gland as claimed in claim 1, characterized in that adjacent to the end face (11) of the extension (10) of the clamping insert (6) the diameter of the enveloping surface of the wires (3) bent onto the outer surface of the clamping insert (6) is smaller than the inside diameter of the threaded sleeve (4) and increases to the larger diameter in a direction from the end face (11).

3. A cable gland as claimed in claim 1 or claim 2, characterized in that the outside of the extension (10) of the clamping insert (6), near the end face (11), is provided with at least one pressing bead, pressing collar or pressing projection (12) extending along at least part of the circumference, preferably along the entire circumference, and producing or increasing the spring action or pressing force for the wires (3).

4. A cable gland as claimed in any one of claims 1 to 3, characterized in that the pressing projection (12) or pressing bead is integral with the outer side of the extension (10) of the clamping insert (6).

5. A cable gland as claimed in any one of claims 1 to 3, characterized in that the pressing projection (12) is a separate ring, e.g. an O-ring or shaped ring made of resilient material, particularly natural or synthetic rubber, disposed particularly in a groove (14) or bearing against an abutment (13) on the outer side of the extension (10) of the clamping insert (6).

6. A cable gland as claimed in any one of claims 1 to 5, characterized in that the distance between the pressing projection (12) and the end face (11) overlapped by the wires (3) at the extension (10) of the clamping insert (6) is smaller than the distance between the pressing projection (12) and the confronting ends of the clamping fingers (9), for instance the distance approximates the radial thickness of the extension.

7. A cable gland as claimed in any one of claims 1 to 6, characterized in that the extension (10) proper is made resilient by having axially extending reductions in wall thickness, grooves or slits (15) terminating particularly at the end face (11) overlapped by the wires (3).

8. A cable gland as claimed in any one of claims 1 to 7, characterized in that the pressing bead (12) takes the form of a resilient lip protruding radially from the extension (10) of the clamping insert (6) or protruding with an arcuate or conical cross section from the outer upper side of the extension (10).

9. A cable gland as claimed in any one of claims 1 to 8, characterized in that the clamping insert (6) and/or extension (10) thereof is prevented from rotating relative to the metal threaded sleeve in the position of use.

10. A cable gland as claimed in claim 9, characterized in that to prevent relative rotation, the clamping insert (6) is provided with external axial ribs (18) and the threaded sleeve (4) is provided with complementary internal axial grooves (19) or the clamping insert (6) is provided with external grooves and the threaded sleeve (4) is provided with complementary ribs, and that - as considered in the direction of insertion of the cable - said grooves (19) and ribs (18) are disposed axially before the contact surface (17) of the threaded sleeve (4), thus in the position of use on that side of the pressing projection (12) of the clamping insert (6) extension (10) which is remote from the end face (11) at which said extension (10) is embraced by the wires (3).

11. A cable gland as claimed in any one of claims 1 to 10, characterized in that the inner surface of the clamping insert (6) facing the cable (2) in the position of use is provided with a circumferential annular seal (20), particularly in the vicinity of the clamping fingers (9), held by means of undercut (21) for example.

## Revendications

1. Raccord vissé (1) pour câble (2) de mise à la masse ou de blindage, avec une douille vissée (4) en matériau électriquement conducteur, métal notamment, et avec une contre-douille (5) ou élément de pression analogue, écrou-raccord notamment, pouvant être assemblée à la douille (4) et destinée à fixer en position le câble (2) - lequel présente une tresse métallique pour la mise à la masse ou le blindage de l'intérieur du câble - par un insert de serrage (6) pouvant être pressé contre le câble (2) à l'aide de la contre-douille (5), la contre-douille (5) sollicitant ou recouvrant l'insert de serrage (6) par une face de pression sensiblement annulaire (7) sur au moins un de ses côtés frontaux, et, lors du serrage du filetage, une région de l'insert de serrage (6) - région pourvue de fentes axiales (8) formant des doigts de serrage (9) - étant déformée radialement en direction du câble (2) par une forme allant en se rétrécissant, au moyen d'un arrondi ou d'un cône par exemple, qui est prévue sur l'insert de serrage (6) et/ou dans la douille vissée (4) ou à la place de la face de pression annulaire dans la contre-douille (5), l'insert de serrage (6) possédant, sur sa région opposée aux doigts de serrage (9), un prolongement (10) duquel dépassent en direction axiale, afin de réaliser une liaison électrique, une zone dénudée ou des fils métalliques dénudés (3) de la tresse métallique, **caractérisé** en ce que l'insert de serrage (6) est réalisé en matériau isolant ou en matière plastique, possède une section approximativement en anneau de cercle, s'applique au moins partiellement contre la face intérieure du raccord vissé (1) en position d'utilisation et son prolongement (10) est réalisé en forme de douille ou de tubulure, en ce que les fils métalliques dépassants (3) peuvent être, dans la région de leur sortie du prolongement (10) de l'insert de serrage (6), être recourbés autour du côté frontal (11) de ce dernier sur sa face extérieure, en ce que la surface d'enveloppe de l'insert de serrage (6) et des fils métalliques recourbés (3) de la tresse métallique appliqués contre la face extérieure de ce dernier présente, en position initiale, une section ou un diamètre supérieur au diamètre intérieur, dans cette région, de la douille vissée (4) entourant l'insert de serrage (6) et son prolongement (10) en position d'utilisation, et en ce que l'insert de serrage (6) est, au moins dans cette région soutenant les fils métalliques (3) contre sa face extérieure, élastiquement fléchissable en direction radiale.

2. Raccord vissé pour câble selon la revendication 1, **caractérisé** en ce que le diamètre de la surface d'enveloppe des fils métalliques (3) recourbés contre la face extérieure de l'insert de serrage (6) est, au voisinage immédiat du côté frontal (11) du prolongement (10) de l'insert de serrage (6), inférieur au diamètre intérieur de la douille vissée (4), et augmente au diamètre supérieur à distance du côté frontal (11).

3. Raccord vissé pour câble selon la revendication 1 ou 2, **caractérisé** en ce qu'au moins un bourrelet, collet ou saillie de serrage (12) est prévu sur la face extérieure du prolongement (10) de l'insert de serrage (6) à proximité du côté frontal (11), saillie qui fait le tour de cette face sur au moins une partie de la circonférence, notamment sur toute la circonférence, et qui produit ou renforce l'effet élastique ou la force de serrage pour les fils métalliques (3).

4. Raccord vissé pour câble selon l'une des revendications 1 à 3, **caractérisé** en ce que la saillie ou bourrelet de serrage (12) est solidaire de la face extérieure du prolongement (10) de l'insert de serrage (6).

5. Raccord vissé pour câble selon l'une des revendications 1 à 3, **caractérisé** en ce que la saillie de serrage (12) est une bague séparée, disposée notamment dans une rainure (14) ou contre une butée (13) sur la face extérieure du prolongement (10) de l'insert de serrage (6), par exemple un joint torique ou une bague profilée en matériau élastiquement flexible, notamment en caoutchouc naturel ou synthétique.

6. Raccord vissé pour câble selon l'une des revendications 1 à 5, **caractérisé** en ce que la distance de la saillie de serrage (12) avec le côté frontal (11), recouvert par les fils métalliques (3), du côté frontal (11) de l'insert de serrage (6), est inférieure à sa distance avec l'extrémité tournée vers elle des doigts de serrage (9), et correspond par exemple approximativement à l'épaisseur radiale du prolongement.

7. Raccord vissé pour câble selon l'une des revendications 1 à 6, **caractérisé** en ce que le prolongement (10) est lui-même réalisé élastique par le fait qu'il possède des affaiblissements de paroi, rainures ou fentes (15) s'étendant en direction axiale, qui débouchent notamment sur le côté frontal (11) recouvert par les fils métalliques (3).

8. Raccord vissé pour câble selon l'une des revendications 1 à 7, **caractérisé** en ce que la saillie de serrage (12) est réalisé sous la forme d'une lèvre à élasticité propre, qui dépasse de la face supérieure extérieure du prolongement (10) de l'insert de serrage (6) en direction radiale ou par une section bombée ou à biais conique.

9. Raccord vissé pour câble selon l'une des revendications 1 à 8, **caractérisé** en ce que l'insert de serrage (6) et/ou son prolongement (10) est, en position d'utilisation, bloqué en rotation par rapport à la douille vissée métallique.

10. Raccord vissé pour câble selon la revendication 9, **caractérisé** en ce que sont prévues, comme blocage en rotation, des nervures (18) s'étendant axialement sur la face extérieure de l'insert de serrage (6), et des rainures correspondantes (19), s'étendant elles aussi axialement, sur la face intérieure de la douille vissée (4), ou des rainures extérieures sur l'insert de serrage (6) et des nervures correspondantes sur la douille vissée (4), et en ce que ces rainures (19) et nervures (18) sont notamment disposées, vu en direction axiale depuis le côté d'introduction du câble, avant la face de contact (17) de la douille vissée (4), donc, en position d'utilisation, sur le côté de la saillie de serrage (12) du prolongement (10) de l'insert de serrage (6) qui est opposé au côté frontal (11), recouvert par les fils métalliques (3), de ce prolongement (10).

11. Raccord vissé pour câble selon l'une des revendications 1 à 10, **caractérisé** en ce qu'un joint d'étanchéité annulairement entourant (20) est prévu, notamment dans la région des doigts de serrage (9), sur la face intérieure de l'insert de serrage (6) qui est tournée vers le câble (2) en position d'utilisation, en y étant notamment maintenu au moyen d'une contre-dépouille (21).
